# EUROPEAN PATENT SPECIFICATION

(11) **EP 4 594 669 B1**
(45) Date of publication and mention of the grant of the patent: **22.07.2026**
(21) Application number: 22834890.0
(22) Date of filing: 07.12.2022
(51) Int. Cl.: F16L 37/098, B60T 17/04, B25B 27/10

(54) **CONNECTOR PART FOR A FLUID FLOW SYSTEM**
ANSCHLUSSTEIL FÜR EIN FLUIDSTRÖMUNGSSYSTEM
PARTIE RACCORD POUR UN SYSTÈME D'ÉCOULEMENT DE FLUIDE

(43) Date of publication of application: 06.08.2025
(73) Proprietor: Kongsberg Automotive Holding 2 AS, 3611 Kongsberg (NO)
(72) Inventor: LIAKLEV, Geir Jørn, 2815 Gjøvik (NO); KHAJEGANI, Ali, 2827 Hunndalen (NO); LUNDBY, Odvar William, 2827 Hunndalen (NO)
(74) Representative: Uexküll & Stolberg
(86) International application number: PCT/EP2022/084809
(87) International publication number: WO 2024/120630

(56) References cited:
- EP-B1- 1 714 068
- US-A- 5 533 761
- US-A- 5 873 610

## Description

The present invention is directed to a connector pair for a fluid flow system, the connector pair comprising a female part and a male part, the female part forming a receptacle having an interior space defining a central axis and configured to receive and hold the male part when it is inserted into the interior space of the female part, wherein at least one locking tongue is integrally extending from an outer wall of the female part and is with its free end pointing in the direction of insertion of the male part and is projecting with an engagement end into the interior space of the female part for engaging a projection on the male part to releasably lock it in the female part.

Fluid flow systems comprising conduits for pneumatic or hydraulic working fluids or cooling fluids are in widespread use in various technical fields, for example in the automotive industry where pressurized fluids are used for braking and power assistance systems and the like. In such fluid flow systems connector pairs are used to connect tubes or other kinds of conduits to each other or to other devices being part of the fluid flow systems. Such connector pairs comprise a female part and a male part which are configured to be connected to each other, wherein the female and male parts are further configured to be connected to a tube or another device of the fluid flow system.

A connector pair according to the preamble of claim 1 is disclosed in EP 1 714 068 B1. The female part of the connector pairs forms a receptacle having an interior space defining a central axis, and thus defining an axial direction. The interior space of the receptacle is configured to receive and hold the male part when it is inserted into the interior space of the female part. For retaining the male part in the female part once it has been inserted the female part is provided with at least one locking tongue. Each locking tongue is integrally extending from an outer wall of the female part, and points with its free end in the insertion direction of the male part into the female part; each locking tongue is projecting with an engagement end into the interior space of the female part for engaging a projection on the male part to releasably lock it in the female part. In the connector pair described in EP 1 714 068 B1 the locking tongues are elastic arms extending in axial direction from an end portion of the outer wall of the female part, wherein this end portion of the other wall surrounds an opening to the interior space for inserting the male part. Each elastic arm carries at its free end opposite to the integrally connected end an inwardly projecting hook configured to engage a projection on the male part. The elastic arm of each locking tongue is provided with an opening extending transverse to the axial direction of the female part. These openings are configured to allow insertion of parts of a release tool which is typically in the form of Seeger ring pliers which can be applied by introducing opposite plier ends into the transverse openings of two opposite locking tongues to urge the locking tongues outwardly and apart from each other to disengage them from the projection on the male part.

The use of Seeger ring pliers to engage transverse openings in locking tongues is complicated and time consuming. Furthermore, it is not possible to form transversely extending openings in the locking tongues in a simple and efficient injection molding process for making the female part of the connector pair because if the transverse openings in the locking tongues would be formed by core parts in the mold cavity it would not be possible to withdraw the injection molded female part from the molding cavity without moving core parts for the transverse openings away.

It is an object of the present invention to provide a connector pair in which the male and female connector part can easily be disengaged from each other again. A further object of the invention is to provide a connector pair for which the female connector part can be produced in a simple and efficient injection molding process.

This object is achieved by a connector pair comprising the features of claim 1. Preferred embodiments of the invention are set out in the dependent claims.

According to the present invention each of the at least one locking tongue comprises at the engagement end two locking teeth which are spaced apart in circumferential direction of the interior space of the female part. The two locking teeth are integrally connected to each other by a radially extended circumferential bridge portion which extends to a greater radial distance from the central axis than adjacent outer wall portions of the female part. In this manner the bridge portion forms a clearance between the female part and the male part in radial direction and between the two locking teeth in circumferential direction, whereby the clearance allows insertion of a wedge-shaped release tool portion by moving it parallel to the insertion direction of the male part into the clearance, thereby urging the bridge portion radially outwards to disengage the two locking teeth from the projection of the male part.

As far as the terms "axial", "radial" and "circumferential" are used herein they refer to the central axis of the interior space of the female part.

The radially extended bridge portion of each locking tongue can be arch-shaped with an apex pointing radially outwards, or can have two steeply rising portions (essentially extending radially) which are connected by an essentially straight top portion, wherein in this latter case the clearance formed by the bridge portion is essentially rectangular.

A wedge-shaped portion of a release tool can be introduced into the clearance either in insertion direction of the male part into the female part or in a direction opposite to the insertion direction by a corresponding movement of a release tool with respect to the female part, wherein a tip portion of the wedge-shaped portion of the release tool is leading when it is advanced into the clearance, thereby bringing the rising surface of the wedge-shaped release tool portion further into the clearance. By further advancing the release tool portion into the clearance the wedge-shaped release tool portion comes into contact with the bridge portion, eventually lifts it and urges the bridge portion and the two locking teeth carried by the bridge portion radially outwards to disengage the locking teeth from projection of the male part. It is an important feature of the design of the locking tongue(s) with the bridge portion(s) as described that the same release tool can be used in two opposite directions from two opposite sides of the bridge portion(s), either by moving it in insertion direction (with the wedge-shaped release tool portion leading) with respect to the female part towards the bridge portion(s) or from the opposite side of the bridge portion(s) in opposite orientation opposite to the insertion direction towards the bridge portion (s) (again with the wedge-shaped release tool portion leading) .

The arrangement of the connector pair according to the present invention offers several advantages. The engagement end of the locking tongue comprising two circumferentially spaced apart locking teeth and an intermediate bridge portion on the one hand ensures an increased the locking strength of the locked state of the male part within the female part, and thus increased safety and reliability of the connection. On the other hand the configuration of the engagement end of each locking tongue with two spaced apart locking teeth and a radially extended bridge portion interconnecting the locking teeth creates a clearance between the female part and the male part and thus offers an easy way to release the locking connection again by inserting a wedge-shaped release tool portion parallel to the insertion direction of the male part in the female part (i.e. also parallel to the central axis of the female part), wherein a relatively low force applied to the release tool is sufficient to disengage the locking tongue(s) from the male part. Furthermore, the disengagement of the locking tongue(s) by introducing a wedge-shaped release tool portion into the clearance of each locking tongue results in a safe and controlled opening (disengagement) of the locking tongue from the male part; as a result any risk of damaging the locking tongues by overbending during the disengagement process of the connector pair is reduced.

Furthermore, the female and male parts each can be formed as integral parts, for example by injection molding. In addition, the female and male parts can be formed to be free of undercuts, and therefore can be manufactured in simple and efficient injection molding processes.

In a preferred embodiment each of the at least one locking tongue comprises two adjacent bars extending integrally from an end portion of the female part (the end portion surrounding the insertion opening of the female part), wherein the bars are spaced apart from each other in circumferential direction and separated by a recess in between. Each of the two bars carries at its free end one of the two locking teeth. The two bars are at their free ends integrally connected by the radially extended bridge portion. The configuration of the locking tongue with two circumferentially spaced apart bars allows to arrange the two locking teeth at the free ends of the bars at a circumferential distance sufficient to ensure a save engagement of the locking teeth with the projection of the male part, whereas on the other hand the two bar structure with a recess between the bars allows to realize the locking tongues with a low amount of material and thus also allows to let the locking tongues flex with relatively low forces upon insertion of the male part into the female part or when disengaging the connector pair by introducing a wedge-shaped release tool portion in the clearance of each of the at least one locking tongue.

In a preferred embodiment, each of the two bars of each of the at least one locking tongue is, except for its end that is integrally connected to the outer wall of the female part, surrounded by recesses, wherein the end portion of each bar adjoining the outer wall is smoothly merging into the outer wall of the female part at an end portion of the female part surrounding an opening of the interior space for receiving the male part.

In a preferred embodiment the male part is at its insertion end provided with an optical marker which is arranged on the insertion end such that it is visible through at least one recess in the outer wall of the female part when the male part is in the fully inserted state in the female part. This provides an optical feedback that allows to check at any time whether the male part is in the fully inserted state in the female part. The positive indication that the male part is in the fully inserted state in the female part may for example be shown by the fact that the optical marker on the insertion end is visible through the recesses at all, i.e. the optical marker is located on the insertion end such that it only reaches a recessed area in the outer wall of the female part when the male part reaches the fully inserted state. Alternatively, there may also be an optical marker on the outer wall of the female part which becomes aligned with the optical marker on the insertion end of the male part when the later reaches its fully inserted state in the female part. In a preferred embodiment the optical marker on the insertion end of the male part is a color ring circumferentially extending around the insertion end.

In a preferred embodiment the two bars of each of the at least one locking tongue are converging towards the free ends so that the circumferential distance between the free ends of the bars is smaller than the circumferential distance between the end portions of the bars which are integrally connected to the outer wall. This configuration of each locking tongue provides for an increased structural strength of the locking tongue.

In a preferred embodiment the two end portions of the bars integrally extending from the outer wall are connected to each other by a second radially extended bridge portion, i.e. the end portion of the outer wall between the two end portions of the bars forms between the bars the radially extended second bridge portion.

In a preferred embodiment there are two locking tongues on the female part which are located diametrically opposite to each other on the receptacle of the female part. This simple configuration on the one hand provides for a safe locking engagement of the male part in the female part by two opposite locking tongues engaging the projection of the male part, and is on the other hand is of simple design and simple to manufacture.

In a preferred embodiment the projection of the male part comprises a circumferentially extending shoulder having a rising ramp portion followed by a steeply dropping portion (essentially in radial direction), wherein the annular shoulder is arranged to cooperate with the teeth of the at least one locking tongue such that, during insertion of the male part into the interior space of the female part, the teeth are sliding along the rising ramp portion urging the at least one locking tongue radially outwards, whereas the locking tongue is elastically flexing back inwards once the locking teeth reached the steeply dropping portion of the circumferential shoulder, whereby the locking teeth engage the circumferential shoulder by abutting against surface portions of the steeply dropping portion to thereby prevent withdrawal of male part from the female part. This configuration of the protrusion comprising a circumferential shoulder having a rising ramp portion followed by a steeply dropping portion provides for a low push-in force when introducing the male part into the female part to bring it into the engaged state. The push-in force is the lower, the lower the rising angle of the ramp portion of the circumferential shoulder is.

In a preferred embodiment the male part is provided with two subsequent circumferential shoulders which are spaced apart in insertion direction such that the at least locking tongue is first engaging a first one of the two circumferential shoulders in a partially inserted state of the male part, whereafter it is engaging a second one of the circumferential shoulders when the male part is reaching the fully inserted state in the female part. Such two-step snap-in connection of the male part is advantageous because an operator can first push-in the male part to reach the partially inserted state by engaging a first one of the two circumferential shoulders; in this partially inserted state the male part is already coupled to the female part but it may for example still be possible to rotate the male part within the interior space of the female part. The operator may then apply a further pushing force on the male part which is needed to push the locking tongue over the second one of the two circumferential shoulders to reach the fully inserted state of the male part in the female part. There may be surface features of the male part and the female part which serve as rotational locking surfaces in the fully inserted state of the male part in which the male part is also locked against rotational movements with respect to the female part.

The two stage push-in process is also advantageous because the operator can hear and haptically feel the two subsequent engagement steps and thus receive a reliable and easily noticeable feedback that the connector pair reached the fully inserted state.

In a preferred embodiment the male part and the female part are provided with mating rotational locking surfaces which are arranged on the male part and on the female part with respect to each other such that the rotational locking surfaces of the male part are not engaging the rotational locking surfaces of the female part when the male part is in the partially inserted state, and such that the rotational locking surfaces of the male part are engaging the mating rotational locking surfaces of the female part (20) in the fully inserted state of the male part (1) in the female part (20) so that the male part is locked against rotational movements with respect to the female part in the fully inserted state in the female part only.

In a preferred embodiment the female part of the connector pair is equipped with a release tool having an annular ring portion fitted around the outer wall of the female part, the annular ring portion being slidable in axial direction on the female part. The annular ring portion is provided with at least one protrusion projecting from the annular ring portion in a direction parallel to the central axis of the interior space of the female part. The protrusion forms the wedge-shaped release tool portion arranged to be moved into the clearance of the bridge portion of the at least one locking tongue when the annular ring portion is moved on the female part towards the bridge portion of the at least one locking tongue to disengage the at least one locking tongue from the projection of the male part. In this manner the female part of the connector pair is provided with an integrated release tool.

In a preferred embodiment the outer wall of the female part is provided with a straight surface feature extending parallel to the central axis of the female part and being configured to cooperate with a mating surface feature formed in the annular ring portion of the release tool to guide the annular ring portion and keep it in a circumferential orientation such that the or each protrusion is circumferentially aligned with an associated one of the at least one locking tongues so that it is moved into the clearance of the bridge portion when the annular ring portion is moved in axial direction towards the bridge portion of the at least one locking tongue.

In a preferred embodiment the female part is integrally formed of thermoplastic material.

In a preferred embodiment the male part is integrally formed of metal or of thermoplastic material.

The present invention will now be described with reference to an embodiment shown in the drawings in which:
Fig. 1 is a perspective view of a release tool of a connector pair;
Fig. 2 is a side view of a male part of the connector pair;
Figs. 3-6 show perspective views of a female part of the connector pair;
Figs. 7 a) - c) show perspective views of the connector pair in three subsequent steps when the male part is released from an engaged state in the female part (Fig. 7a)) to a disengaged state (Fig. 7 b)) to remove the male part from the female part (Fig. 7 c));
Figs. 8 a) - d) show cross-sectional views of the connector pair during subsequent steps when the connector pair from an engaged state (Fig. 8 a)) to a disengaged state (Fig. 8 b)), and is then moved in the interior space of the female part (Fig. 8 c)), and is eventually removed from the female part (Fig. 8 d)); and
Fig. 9 is an enlarged partial view of the cross-sectional view of Fig. 8 a) including an enlarged detail to illustrate the release process of the male part from the female part.

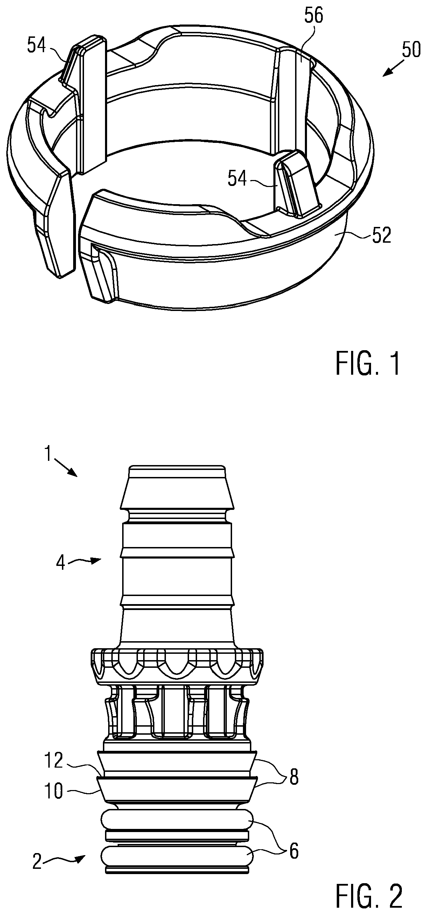

Fig. 2 shows a side view of a male part 1 configured to be inserted into a female part of a connector pair. The male part 1 is a generally tubular member having a central passageway for fluid flow through the male part 1. The male part 1 comprises an insertion end 2 to be inserted into a receptacle of a female part, and an opposite tube connector end 4 configured to connect a tube end portion thereto by pushing the tube end portion onto the tube connector end 4 of the male part 1. The tube connector end 4 is provided with surface structures (circumferential rigdes) for retaining the tube end portion on the tube connector end 4.

The insertion end 2 is provided with two sealing rings 6 and with two projections 8 in the form of two subsequent circumferential shoulders, wherein each circumferential shoulder comprises a rising ramp portion 10 followed by a steeply dropping portion 12 of the circumferential shoulder, wherein the steeply dropping portion 12 can be oriented essentially perpendicular to a central axis of the male part 1.

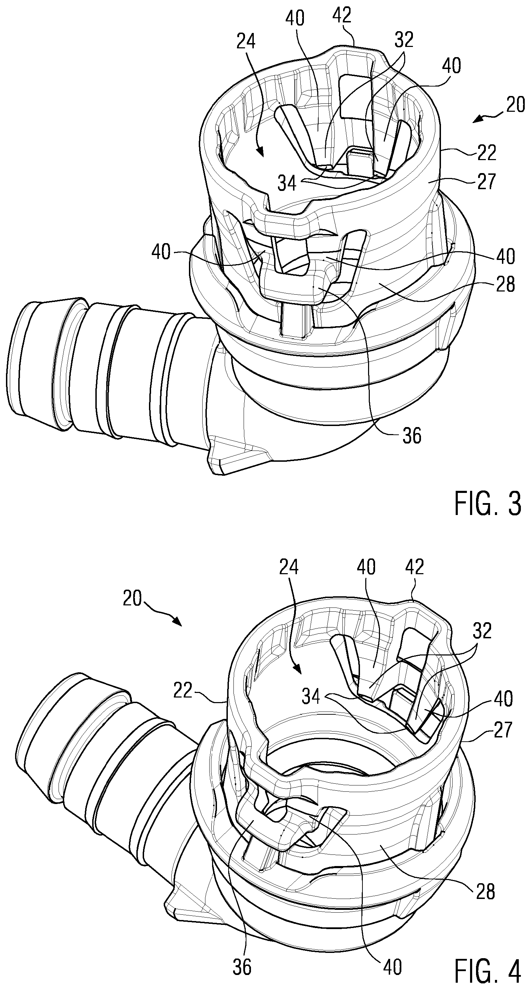

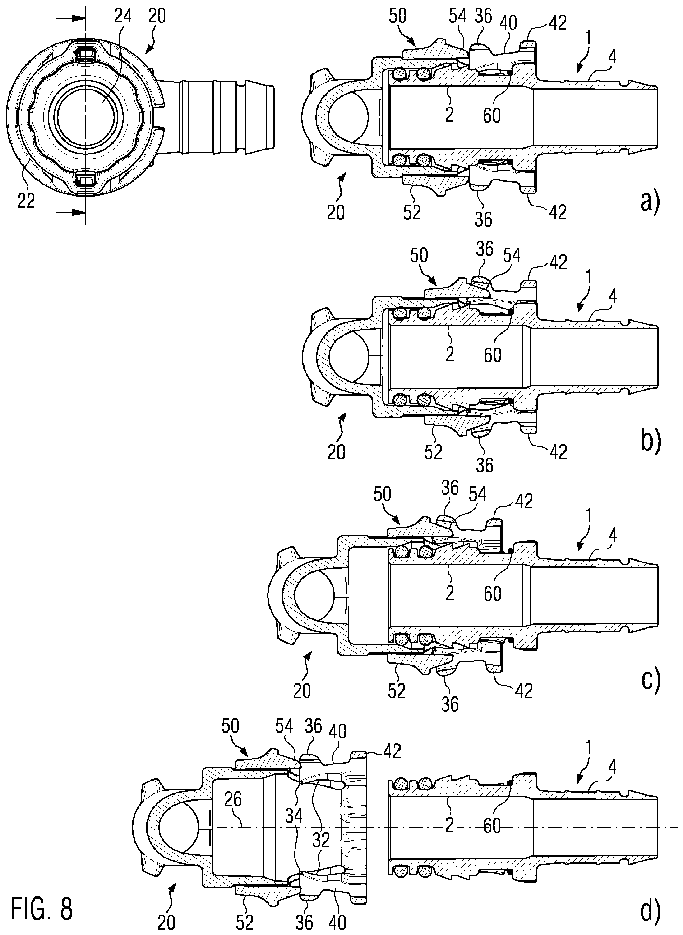

The female part of the connector pair will now be described with reference to the perspective views of the female part in Figs. 3 to 6. First with reference to Figs. 3 and 4 the female part 20 comprises a receptacle 22 having an interior space 24 for receiving the insertion end 2 of the male part 1. The interior space 24 of the female part 20 defines a central axis 26 as indicated in Fig. 8 d). A tube connector end of the female part 20 is in fluid communication with the interior space 24 of the receptacle 22, and extends essentially at a right angle with respect to the central axis of the interior space 24 of the receptacle 22 of the female part 20. As the tube connector end 4 of the male part the tube connector end is configured for connecting a tube end portion (not shown) thereto.

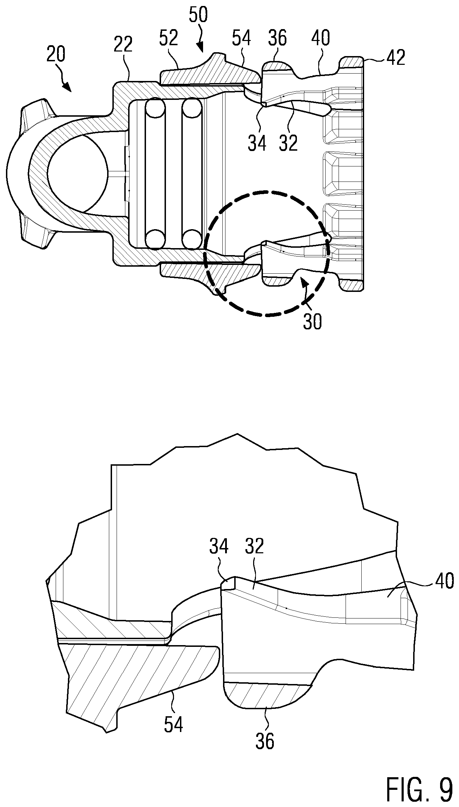

The receptacle 22 comprises two locking tongues 30 (see Fig. 9) which are located diametrically opposite to each other. Each locking tongue 30 is integrally connected to an outer wall 27 of the receptacle 22 in an end region of the receptacle 22 surrounding an opening of the interior space. Each locking tongue is extending and pointing with a free engagement end portion 32 in an insertion direction in which the male part 1 is moved when it is inserted into the interior space 24 of the female part 20. Each locking tongue carries two locking teeth 34 which are circumferentially spaced apart from each other and which are projecting into the interior space 24. The locking tongues are elastically flexible.

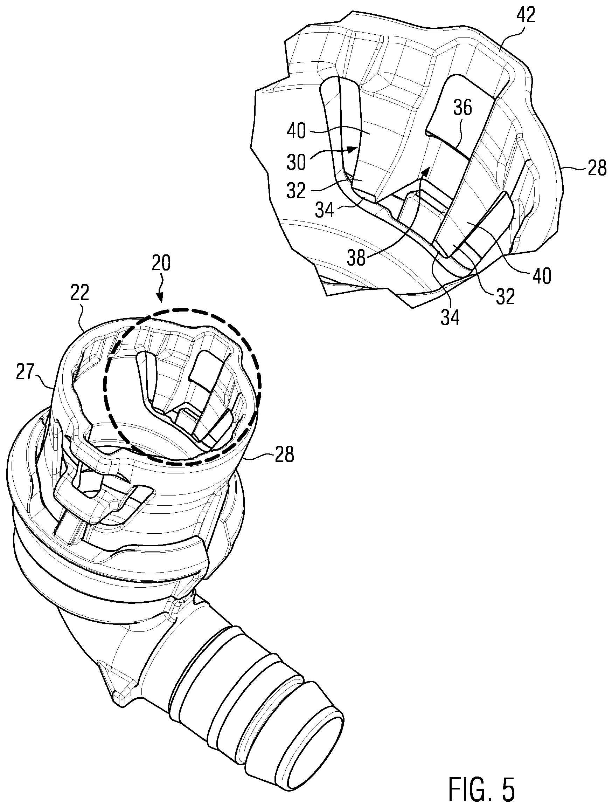

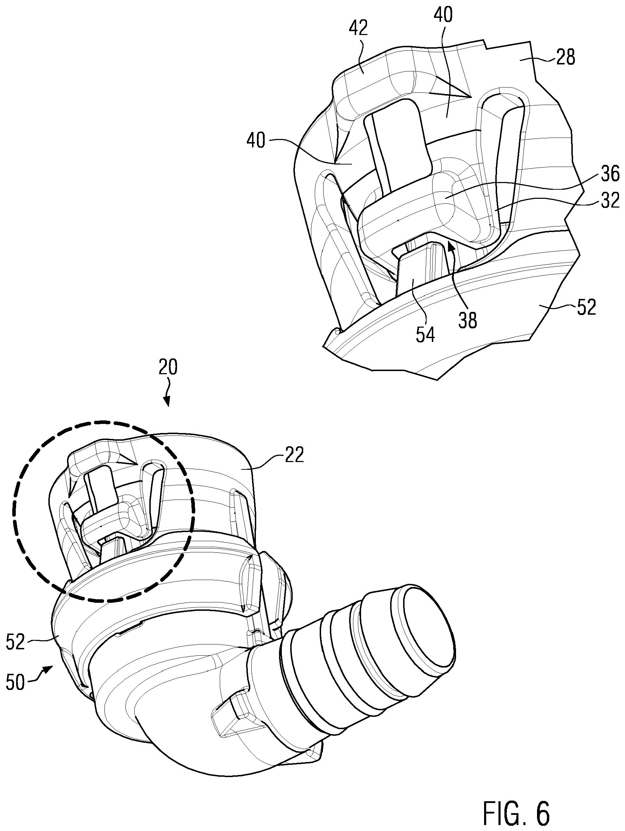

The design of each locking tongue will be described with reference to Figs. 3 to 6. Each of the two opposite locking tongues comprises two adjacent bars 40 (see for example Fig. 3) which extend from an end portion of the outer wall 27 of the receptacle 22 and which extend in the insertion direction of the male part 1. Except for the end portion of the bars 40 which are integrally connected to the outer wall 27 of the receptacle 22, each of the bars 40 is surrounded by recesses in the outer wall of the receptacle. Each of the two bars 40 of a locking tongue projects with a free engagement end 32 into the interior space 24 of the receptacle. Each of the two bars 40 carries at its engagement end 32 a locking tooth 34 projecting into the interior space 24. The two adjacent bars 40 of a locking tongue are spaced apart from each other in circumferential direction of the receptacle 22, thereby forming a clearance space between the two adjacent bars. In this manner each locking tongue comprises two locking teeth 34 carried by the two bars 40. The two locking teeth 34 are spaced apart in the circumferential direction of the receptacle 22 of the female part 20. At the engagement ends 32 of the two bars 40 of the locking tongue the two bars 40 are integrally connected to each other by a radially extended bridge portion 36. This radially extended bridge portion 36 extends to a greater radial distance than adjacent outer wall portions 28 of the female part 20. In this manner the radially extended bridge portion 36 spans a clearance 38 (see e.g. Fig. 6) between the female part 20 and the male part 1, when a male part 1 is inserted into the interior space of the receptacle 22 of the female part 20. This clearance 38 is extending, when the male part 1 is engaged in the interior space 24 of the female part 20, between the two locking teeth 34 of the two bars and between an outer wall portion of the engaged male part 1 and the facing inner surface of the bridge portion 36 of the locking tongue. This clearance 38 is also indicated in Fig. 5 between the two spaced apart bars 40 and below the radially extended bridge portion 36 of the locking tongue.

With reference to Fig. 1 a release tool 50 will now be described. The release tool 50 comprises an annular (split) ring portion 52. The annular ring portion 52 is dimensioned such that the annular ring portion 52 can be fitted around the outer wall 27 of the female part 20, wherein the annular ring portion 52 is slidable in axial direction on the female part 20. The annular ring portion 52 of the release tool 50 is provided with two protrusions projecting from the annular ring portion in a direction parallel to the central axis of the female part 20, wherein each of the two protrusions forms a wedge-shaped release tool portion 54 of the release tool 50. Each of the wedge-shaped release tool portions 54 longitudinally extends in a direction parallel to the insertion direction of the male part (= axial direction of the female part) and therefore extends in moving direction of the release tool 50 when the release tool 50 is advanced on the female part 20 towards the bridge portions 36 of the locking tongues.

The operation of the release tool 50 for disengaging the male part 1 out of the connected state in the female part 20 will now be described with reference to Figs. 8 a) - d). At the top on the left hand side a plan view if the female part 20 is shown in which the plane of the cross-sections is indicated which are shown in the cross-sectional views of the connector pair on the right hand side of Figs. 8 a) - d). The plane of the cross-section actually cuts through the middle of the bridge portions 36 of the two diametrically opposite locking tongues. For each of the two locking tongues one of the two bars 40 (see Fig. 8 a)) is visible in a side view.

Fig. 8 a) shows the connector pair with the female part 20 and the male part 1 in the engaged state in which the locking teeth of each of the two locking tongues is in abutment against the steeply dropping portion 12 (see Fig. 2) of the second one of the two circumferential shoulders. Due to this abutment of the locking teeth against the steeply dropping portions of the circumferential shoulders the male part 1 is locked against movements in opposite direction to the insertion direction and is therefore safely connected to the female part 20.

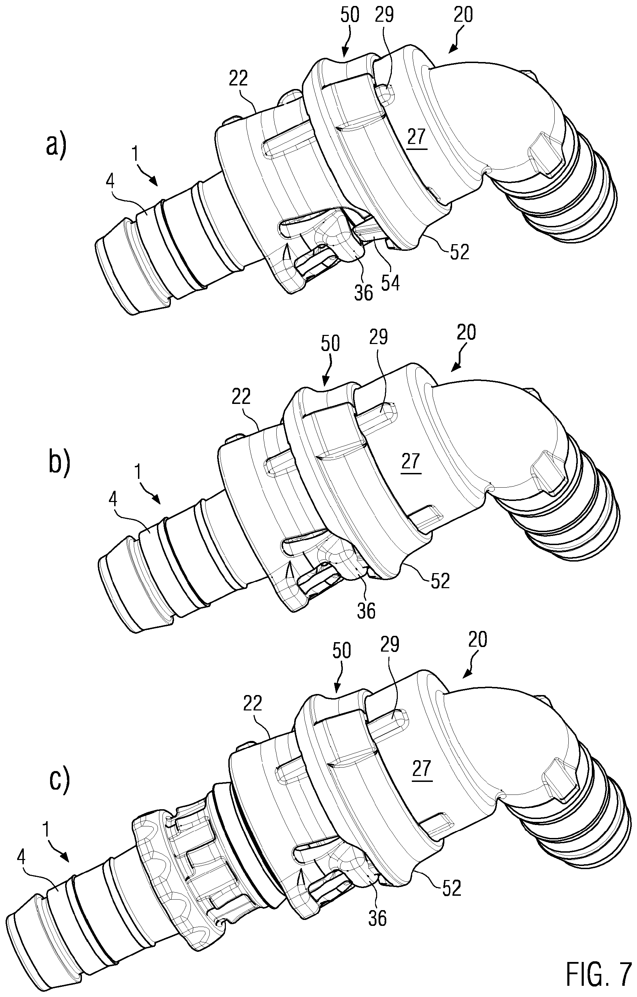

In order to disengage the male part 1 to allow to remove it from the female part 20 the release tool 50 is operated by moving it towards the bridge portions 36 of the two locking tongues, i.e. is moved in a direction opposite to the insertion direction of the male part 1 when it is inserted into the female part 20. This movement towards the bridge portions 36 of the locking tongues is shown in Fig. 8 b). In particular, the release tool 50 is guided on the female part 20 to move in such an orientation that the wedge-shaped release tool portions 54 are aligned with the bridge portions 36 (this can also be seen in Fig. 7 a)). Thus, by moving the release tool 50 in the illustrated manner the tips of the wedge-shaped release tool portions enter 54 enter the clearances 38 of the two opposite locking tongues. The advancing wedge-shaped release tool portions 54 contact an inner surface of each of the two bridge portions 36 of the two opposite locking tongues, thereby urging the bars 40 of the two opposite locking tongues to flex radially outwards which lifts the bridge portions 36 radially outwards, as illustrated in Fig. 8 b). In this manner the two locking teeth 40 carried by each bridge portion 36 are displaced radially outwards and out of contact with the steeply rising portion of the circumferential shoulder, thereby disengaging the male part 1 inside of the receptacle 22 from the female part 20.

In the disengaged state of the locking teeth 34 the male part 1 can be withdrawn from the interior space of the female part 20, as illustrated in Fig. 8 c) in a direction opposite to the insertion direction of the male part 1. Eventually, the male part 1 is completely withdrawn from the interior space of the female part 20 as illustrated in Fig. 8 d). In the illustrated state the release tool 50 is already being withdrawn again and moving with its release tool portions 54 out of the clearances 38 of the two opposing locking tongues.

Fig. 9 is an enlarged partial view of the cross-section in Fig. 8 a), wherein Fig. 9 shows a detail at an enlarged scale. In the enlarged detail of Fig. 9 it is visible that the wedge-shaped release tool portion 54 is in a state immediately before the entry to the clearance formed between the two spaced apart bars 40 above the radially extended bridge portion 36 shown in the lower enlarged detail of Fig. 9. When the wedge-shaped release tool portion 54 is further advanced (such as shown in Fig. 8 b) it is apparent that the wedge-shaped release tool portion 54 will urge the bridge portion 36 radially outwards, thereby flexing the bars 40 of the locking tongue to disengage engagement of the locking teeth 34 with the projection on the male part.

The disengagement process of the male part 1 from the female part 20 is also shown in the sequence of perspective views in Figs. 7 a) - c). In Fig. 7 a) the release tool 50 starts to be moved towards the bridge portion 36 of the two opposite locking tongues, thereby advancing the wedge-shaped release tool portions 54 to move into the clearance 38 of each bridge portion 36. In Fig. 7 b) the wedge-shaped release tool portions have been moved into the clearances of the bridge portions 36 such that the bridge portions 36 of the two opposite locking tongues have been urged radially outwards, as also shown in Fig. 8 b), thereby disengaging the two locking teeth 34 carried by each bridge portion 36 from the circumferential shown shoulder on the male part, thus releasing the male part 1 which can then be moved out of the female part 20, as shown in Fig. 7 c).

Also shown in Figs. 7 a) - c) is a surface feature 29 on the outer wall 27 of the female part 20, namely a longitudinal ridge 29 extending in axial direction and projecting from the surface of the outer wall 27. This projecting surface feature 29 of the female part 20 cooperates with a mating surface feature 56 (see Fig. 1) of the release tool 50, namely with a groove in which the ridge surface feature 29 of the female part is received. The mating surface features 29 and 56 of the female part 20 and the release tool 50, respectively, are arranged such that the release tool 50 is guided for linear movement on the female part 20 in a circumferential orientation such that the wedge-shaped release tool portions 54 are aligned with the bridge portions 36 of the two opposite locking tongues, thereby ensuring that the wedge-shaped release tool portions 54 moved into the clearances of the bridge portions 36 when the release tool 50 is advanced towards the bridge portions 36 of the locking tongues.

From the forgoing description of the disengagement steps of the connector pair it will also be apparent how the male part 1 is, when it is inserted into the receptacle 22 of the female part, being engaged by the female part 20 in a two step engagement process. In particular, when the male part 1 as shown in Fig. 2 is moved with the insertion end 2 into the opening of the interior space 24 of the receptacle 22 the end portion with the two sealing rings 6 is first passing by the locking tongues. Then the locking teeth 34 of the two opposing locking tongues slide on the rising ramp portion 10 of the first circumferential shoulder which flexes the bars 40 and urges the locking teeth radially outwards. When the male part 1 is further advanced in insertion direction the locking teeth 34 reach the steeply dropping portion 12 of the first circumferential shoulder. As a result the elastic bars 40 of the two opposing locking tongues elastically flex back which causes the first noticeable engagement step. In this partially inserted state the male part 1 and the female part 20 are already coupled to each other but the male part 1 can still be rotated with respect to the female part 20. When the male part 1 is moved further in insertion direction the locking teeth 34 of the two opposing locking tongues slide along the rising ramp portion of the second circumferential shoulder, which eventually results in the same manner as for the first circumferential shoulder, in the engagement of the locking teeth 40 of the two opposing locking bars with the steeply dropping portion of the second circumferential shoulder. This second engagement step is again haptically noticeable for an operator.

Also shown in Figs. 8a) - d) is a color marker on the male part in the form of a colored ring 60 fitted around the circumference of the male part in an axial position along the male part next to the second bridge portion 42. Due to this positioning of the colored ring 60 it is visible through the recess or opening between the two bars 40 and the bridge portion 36 and the second bridge portion 42 (see for example details of Figs. 5 and 6), namely the colored ring 60 is visible through this recess when the male part 1 is in the fully inserted state as illustrated in Fig. 8 a) . Given the distance between the first and second circumferential shoulders of the male part it can be seen that the colored ring 60 is positioned in axial direction in a position corresponding to the second bridge portion 42 when the male part is in the partially inserted state, i.e. the colored ring 60 is covered by the second bridge portion 42 in the partially inserted state and thus not visible. In this manner an operator can easily check, when the male part 1 is already coupled in the receptacle of the female part 20 by engagement of the locking teeth with one of the circumferential shoulders, whether the male part 1 is in the partially inserted state (colored ring 60 is not visible in the recess between the two bars 40 of the locking tongues) or whether it is in the fully inserted state (colored ring 60 is visible in the recess between the two bars 40 of the locking tongues).

The interior space of the female part 20 and the surface of the male part 1 are provided with mating locking surface structures which come into abutment against each other when the fully inserted state is reached with the second engagement step, wherein the abutting mating locking surfaces of the male part and the female part prevent rotational movements of the male part 1 with respect to the female part 20 in the fully inserted state after two engagement steps.

## Claims

1. Connector pair for a fluid flow system, the connector pair comprising a female part (20) and a male part (1), the female part (20) forming a receptacle (22) having an outer wall (27) and an interior space (24) defining a central axis (26) and configured to receive and hold the male part (1) when it is inserted in an insertion direction into the interior space (24) of the female part (20), wherein at least one locking tongue (30) is integrally extending from the outer wall (27) of the female part and is with its free engagement end (32) pointing in the direction of insertion of the male part and is projecting with the engagement end into the interior space (24) of the female part (20) for engaging a projection (8) on the male part (1) to releasably lock it in the female part (20), **characterized in that** the engagement end (32) of the at least one locking tongue (30) comprises two locking teeth (34) which are spaced apart in a circumferential direction of the interior space (24) of the female part (20) and which are integrally connected by a radially extended bridge portion (36) which extends to a greater radial distance than adjacent outer wall portions (28) of the female part (20) to form a clearance (38) between the female part (20) and the male part (1) between the two locking teeth (34) to allow insertion of a wedge-shaped release tool portion (54) by moving it parallel to the insertion direction into the clearance (38), thereby urging the bridge portion (36) radially outwards to disengage the locking teeth (34) from the projection (8) of the male part.

2. Connector pair according to claim 1, **characterized in that** each of the at least one locking tongue (30) comprises two adjacent bars (40) extending integrally from the outer wall (27) of the female part (20) and being spaced apart in circumferential direction with a recess in between, each of the two bars (40) carrying at its free end one of the two locking teeth (34), wherein the two bars (40) are at their free ends integrally connected by the radially extended bridge portion (36).

3. Connector pair according to claim 2, **characterized in that** each bar (40) is, except for its end that is integrally connected to the outer wall (27) of the female part, surrounded by recesses in the outer wall (27), wherein an end portion of each bar (40) which is adjoining the outer wall (27) is smoothly merging into the outer wall (27) of the female part at an end portion of the female part (20) surrounding an opening of the interior space (24) for receiving the male part (1).

4. Connector pair according to claim 2 or 3, **characterized in that** the insertion end (2) of the male part (1) is provided with an optical marker which is arranged on the insertion end (2) such that it is visible through at least one recess in the outer wall (27) when the male part (1) is in the fully inserted state in the female part (20).

5. Connector pair according to claim 4, **characterized in that** the optical marker is a color ring circumferentially extending around the insertion end (4) of the male part.

6. Connector pair according to any of the claims 2 to 5, **characterized in that** the two bars (40) of each of the at least one locking tongue (30) are converging towards their free ends so that the circumferential distance between the free ends of the bars (40) is smaller than the circumferential distance between the end portions of the bars (40) which are integrally connected to the outer wall (27).

7. Connector pair according to any of the claims 2 to 6, **characterized in that** the two end portions of the bars (40) integrally extending from the outer wall (27) are connected to each other by a second radially extended bridge portion (42) of the outer wall (27) which is radially projecting beyond circumferentially adjacent outer wall portions (28) of the female part (20).

8. Connector pair according to any of the preceding claims, **characterized in that** there are two locking tongues (30) on the female part (20) which are located diametrically opposite on the receptacle (22).

9. Connector pair according to any of the preceding claims, **characterized in that** the projection (8) of the male part (1) comprises a circumferentially extending shoulder having a rising ramp portion (10) followed by a steeply dropping portion (12), wherein the rising ramp portion (10) is arranged to cooperate with the locking teeth (34) of the at least one locking tongue (30) such that, during insertion of the male part (1) into the interior space (24) of the female part (20), the locking teeth (34) are sliding along the rising ramp portion (10) urging the at least one locking tongue (30) radially outwards, wherein the at least one locking tongue is elastically flexing back inwards once the locking teeth (34) reached the steeply dropping portion (12) of the circumferential shoulder, whereby the locking teeth (34) engage steeply dropping portion (12) of the circumferential shoulder to prevent withdrawal of the male part (1) from the female part (20).

10. Connector pair according to claim 9, **characterized in that** the male part (1) is provided with two subsequent circumferential shoulders which are spaced apart in insertion direction such that the at least one locking tongue (30) is first engaging a first one of the two shoulders in a partially inserted state of the male part (1), whereafter when being further advanced in insertion direction into the female part it is engaging a second one of the two circumferential shoulders when the male part (1) reached the fully inserted state in the female part (20).

11. Connector pair according to claim 10, **characterized in that** the male part (1) and the female part (20) are each provided with rotational locking surfaces which are arranged with respect to each other such that the rotational locking surfaces of the male part are not engaging the rotational locking surfaces of the female part (20) when the male part (1) is in the partially inserted state and such that the rotational locking surfaces of the male part (1) are engaging the rotational locking surfaces of the female part (20) in the fully inserted state of the male part (1) in the female part (20) such that the male part (1) is locked against rotational movements in the fully inserted state in the female part (20) only.

12. Connector pair according to any of the preceding claims, **characterized in that** the female part (20) is equipped with a release tool (50) having an annular ring portion (52) fitted around the outer wall (27) of the female part (20) and being slidable in axial direction on the female part (20), wherein the annular ring portion (52) is provided with at least one protrusion which projects from the annular ring portion in a direction parallel to the central axis and which forms the wedge-shaped release tool portion (54) arranged to be moved into the clearance (38) of the bridge portion (36) of the at least locking tongue (30) when the annular ring portion (52) is moved towards the bridge portion (36) of the at least one locking tongue (30) to disengage the at least one locking tongue (30) from the projection (8) of the male part (1).

13. Connector pair according to claim 12, **characterized in that** the outer wall (27) of the female part (30) is provided with a straight surface feature (29) extending parallel to the central axis of the female part (20) and configured to cooperate with a mating surface feature (56) formed in the annular ring portion (52) to guide the annular ring portion (52) and keep it in a circumferential orientation such that the or each protrusion is circumferentially aligned with an associated one of the at least one locking tongues (30) so that it is moved into the clearance (38) of the bridge portion (36) when the annular ring portion (52) is moved towards the bridge portion (36) of the at one locking tongue (30).

14. Connector pair according to any of the preceding claims, **characterized in that** the female part (20) is integrally formed of thermoplastic material.

15. Connector pair according to any of the preceding claims, **characterized in that** the male part (1) is integrally formed of metal or of thermoplastic material.

## Patentansprüche

1. Anschlusspaar für ein Fluidströmungssystem, wobei das Anschlusspaar ein Buchsenteil (20) und ein Steckerteil (1) umfasst, wobei das Buchsenteil (20) eine Steckerbuchse (22) mit einer Außenwand (27) und einen Innenraum (24) bildet, die eine Mittelachse (26) definiert und dazu ausgestaltet ist, das Steckerteil (1) aufzunehmen und festzuhalten, wenn es in einer Einsetzrichtung in den Innenraum (24) des Buchsenteils (20) gesteckt wird, wobei wenigstens eine Verschlusszunge (30) integral von der Außenwand (27) des Buchsenteils ausgeht und mit seinem freien Eingriffsende (32) in Einsteckrichtung des Steckerteils weist und mit seinem Eingriffsende in den Innenraum (24) des Buchsenteils (20) vorsteht, um mit einem Vorsprung (8) am Steckerteil (1) einzugreifen, um es lösbar im Buchsenteil (20) festzuhalten, **dadurch gekennzeichnet, dass** das Eingriffsende (32) der wenigstens einen Verschlusszunge (30) zwei Verschlusszähne (34) aufweist, die in einer Umfangsrichtung des Innenraums (24) des Buchsenteils (20) auf Abstand zueinander sind und die durch einen radial weiter außen verlaufenden Brückenbereich (36) integral verbunden sind, der in einem größeren radialen Abstand als benachbarte Außenwandbereiche (28) des Buchsenteils (20) verläuft, um zwischen den beiden Verschlusszähnen (34) einen Freiraum (38) zwischen dem Buchsenteil (20) und dem Steckerteil (1) zu bilden, um die Einführung eines keilförmigen Entriegelungswerkzeugteils (54) zu ermöglichen, indem dieses parallel zur Einsteckrichtung in den Freiraum (38) bewegt wird, wodurch der Brückenbereich (36) radial nach außen gedrückt wird, um die Verschlusszähne (34) vom Vorsprung (8) des Steckerteils zu lösen.

2. Anschlusspaar nach Anspruch 1, **dadurch gekennzeichnet, dass** jede der wenigstens einen Verschlusszunge (30) zwei benachbarte Stege (40) aufweist, die integral von der Außenwand (27) des Buchsenteils (20) ausgehen und die in Umfangsrichtung auf Abstand zueinander mit einer Aussparung dazwischen liegen, wobei jeder der beiden Stege (40) an seinem freien Ende einen der beiden Verschlusszähne (34) trägt, wobei die beiden Stege (40) an ihren freien Enden durch den radial vorstehenden Brückenbereich (36) integral miteinander verbunden sind.

3. Anschlusspaar nach Anspruch 2, **dadurch gekennzeichnet, dass** jeder Steg (40), außer an seinem integral mit der Außenwand (27) des Buchsenteils verbundenen Ende, von Aussparungen in der Außenwand (27) umgeben ist, wobei ein Endbereich jedes Steges (40), der mit der Außenwand (27) verbunden ist, sanft in die Außenwand (27) des Buchsenteils an einem Endbereich des Buchsenteils (20) übergeht, der eine Öffnung des Innenraums (24) zur Aufnahme des Steckerteils (1) umgibt.

4. Anschlusspaar nach Anspruch 2 oder 3, **dadurch gekennzeichnet, dass** das Einsteckende (2) des Steckerteils (1) mit einer optischen Markierung versehen ist, die am Einsteckende (2) so angeordnet ist, dass sie durch die wenigstens eine Aussparung in der Außenwand (27) sichtbar ist, wenn das Steckerteil (1) im vollständig eingesteckten Zustand im Buchsenteil (20) ist.

5. Anschlusspaar nach Anspruch 4, **dadurch gekennzeichnet, dass** die optische Markierung ein Farbring ist, der um den Umfang des Einsteckendes (4) des Steckerteils verläuft.

6. Anschlusspaar nach einem der Ansprüche 2 bis 5, **dadurch gekennzeichnet, dass** die beiden Stege (40) von jeder der wenigstens einen Verschlusszunge (30) zu den freien Enden hin zusammenlaufen, so dass der Umfangsabstand zwischen den freien Enden der Stege (40) kleiner als der Umfangsabstand zwischen den Endbereichen der Stege (40), die integral mit der Außenwand (27) verbunden sind.

7. Anschlusspaar nach einem der Ansprüche 2 bis 6, **dadurch gekennzeichnet, dass** die Endbereiche der Stege (40), die integral von der Außenwand (27) ausgehen, durch einen zweiten radial vorstehenden Brückenbereich (42) der Außenwand (27) miteinander verbunden sind, der radial weiter nach außen vorsteht als die in Umfangsrichtung benachbarten Außenwandbereiche (28) des Buchsenteils (20).

8. Anschlusspaar nach einem der vorhergehenden Ansprüche, **dadurch gekennzeichnet, dass** zwei Verschlusszungen (30) am Buchsenteil (20) vorhanden sind, die an der Steckerbuchse (22) einander diametral gegenüberliegen.

9. Anschlusspaar nach einem der vorhergehenden Ansprüche, **dadurch gekennzeichnet, dass** der Vorsprung (8) des Steckerteils (1) eine in Umfangsrichtung verlaufende Schulter mit einem ansteigenden Rampenbereich (10) gefolgt von einem steil abfallenden Bereich (12) aufweist, wobei der ansteigende Rampenbereich (10) dazu ausgestaltet ist, um mit den Verschlusszähnen (34) der wenigstens einen Verschlusszunge (30) so zusammenzuwirken, dass während des Einsteckens des Steckerteils (1) in den Innenraum (24) des Buchsenteils (20) die Verschlusszähne (34) entlang des ansteigenden Rampenbereichs (10) gleiten, wodurch die wenigstens eine Verschlusszunge (30) radial nach außen gedrückt wird, wobei die wenigsten eine Verschlusszunge sich elastisch zurück nach innen bewegt, sobald die Verschlusszähne (34) den steil abfallenden Bereich (12) der Umfangsschulter erreichen, wodurch die Verschlusszähne (34) an dem steil abfallenden Bereich (12) der Umfangsschulter anliegen, um ein Herausziehen des Steckerteils (1) aus dem Buchsenteil (20) zu verhindern.

10. Anschlusspaar nach Anspruch 9, **dadurch gekennzeichnet, dass** das Steckerteil (1) mit zwei aufeinanderfolgenden Umfangsschultern versehen ist, die in Einsteckrichtung auf Abstand zueinander liegen, so dass die wenigstens eine Verschlusszunge (30) zuerst mit einer ersten der beiden Schultern in einem teilweisen eingesteckten Zustand des Steckerteils (1) eingreift, wonach, wenn dieses weiter in Einsteckrichtung in das Buchsenteil eingesteckt wird, es in Eingriff mit einer zweiten der Umfangsschultern kommt, wenn das Steckerteil (1) den vollständig eingesteckten Zustand im Buchsenteil (20) erreicht.

11. Anschlusspaar nach Anspruch 10, **dadurch gekennzeichnet, dass** das Steckerteil (1) und das Buchsenteil (20) jeweils mit Drehverriegelungsflächen versehen sind, die in Bezug aufeinander so angeordnet sind, dass die Drehverriegelungsflächen des Steckerteils nicht an den Drehverriegelungsflächen des Buchsenteils (20) anliegen, wenn das Steckerteil (1) sich im teilweise eingesteckten Zustand befindet, und so dass im vollständig eingesteckten Zustand des Steckerteils (1) im Buchsenteil (20) die Drehverriegelungsflächen des Steckerteils (1) an den Drehverriegelungsflächen des Buchenseils (20) anliegen, so dass das Steckerteil (1) nur im vollständig eingesteckten Zustand im Buchsenteil (20) gegen Drehbewegungen verriegelt ist.

12. Anschlusspaar nach einem der vorhergehenden Ansprüche, **dadurch gekennzeichnet, dass** das Buchensteil (20) mit einem Entriegelungswerkzeug ausgerüstet ist, das einen geschlossenen Ringbereich (52) hat, der um die Außenwand (27) des Buchsenteils (20) verlaufend angeordnet ist und der in axialer Richtung am Buchsenteil (20) verschiebbar ist, wobei der geschlossene Ringbereich (52) mit wenigstens einem Vorsprung versehen ist, der von dem geschlossenen Ringbereich in einer Richtung parallel zur zentralen Achse verläuft und der den keilförmigen Entriegelungswerkzeugteil (54) bildet, der dazu ausgestaltet ist, um in den Freiraum (38) des Brückenbereichs (36) der wenigstens einen Verschlusszunge (30) bewegt zu werden, wenn der geschlossene Ringbereich (52) zum Brückenbereich (36) der wenigstens einen Verschlusszunge (30) hin bewegt wird, um die wenigstens eine Verschlusszunge (30) vom Vorsprung (8) des Steckerteils (1) zu lösen.

13. Anschlusspaar nach Anspruch 12, **dadurch gekennzeichnet, dass** die Außenwand (27) des Buchsenteils (30) mit einem geraden Oberflächenmerkmal (29) versehen ist, das parallel zur zentralen Achse des Buchsenteils (20) verläuft und dazu ausgestaltet ist, um mit einem dazu passenden Oberflächenmerkmal (56) zusammenzuwirken, das in dem geschlossenen Ringbereich (52) gebildet ist, um den geschlossen Ringbereich (52) zu führen und in einer Umfangsorientierung zu halten, so dass der oder jeder Vorsprung in Umfangsrichtung mit einer zugeordneten der wenigstens einen Verschlusszunge (30) ausgerichtet ist, so dass er in den Freiraum (38) des Brückenbereichs (36) bewegt wird, wenn der geschlossene Ringbereich (52) zum Brückenbereich (36) der wenigstens einen Verschlusszunge (30) hin bewegt wird.

14. Anschlusspaar nach einem der vorhergehenden Ansprüche, **dadurch gekennzeichnet, dass** das Buchensteil (20) in einem Stück aus thermoplastischem Material hergestellt ist.

15. Anschlusspaar nach einem der vorhergehenden Ansprüche, **dadurch gekennzeichnet, dass** das Steckerteil (1) in einem Stück aus Metall oder aus thermoplastischem Material hergestellte ist.

## Revendications

1. Paire de raccord pour un système d'écoulement de fluide, la paire de raccord comprenant une partie femelle (20) et une partie mâle (1), la partie femelle (20) formant un réceptacle (22) ayant une paroi extérieure (27) et un espace intérieur (24) définissant un axe central (26) et configuré pour recevoir et maintenir la partie mâle (1) lorsqu'elle est insérée dans une direction d'insertion dans l'espace intérieur (24) de la partie femelle (20), dans laquelle au moins une languette de verrouillage (30) s'étend intégralement depuis la paroi extérieure (27) de la partie femelle et est avec son extrémité de mise en prise libre (32) pointant dans la direction d'insertion de la partie mâle et fait saillie avec l'extrémité de mise en prise dans l'espace intérieur (24) de la partie femelle (20) pour mettre en prise une saillie (8) sur la partie mâle (1) pour la verrouiller de manière libérable dans la partie femelle (20), **caractérisée en ce que** l'extrémité de mise en prise (32) de la au moins une languette de verrouillage (30) comprend deux dents de verrouillage (34) qui sont espacées dans une direction circonférentielle de l'espace intérieur (24) de la partie femelle (20) et qui sont raccordées intégralement par une partie de pont étendue radialement (36) qui s'étend à une distance radiale plus grande que des parties de paroi extérieure adjacentes (28) de la partie femelle (20) pour former un jeu (38) entre la partie femelle (20) et la partie mâle (1) entre les deux dents de verrouillage (34) afin de permettre l'insertion d'une partie d'outil de libération en forme de coin (54) en la déplaçant parallèlement à la direction d'insertion dans le jeu (38), en poussant ainsi la partie de pont (36) radialement vers l'extérieur pour libérer les dents de verrouillage (34) de la saillie (8) de la partie mâle.

2. Paire de raccord selon la revendication 1, **caractérisée en ce que** chacune de la au moins une languette de verrouillage (30) comprend deux barres adjacentes (40) s'étendant intégralement à partir de la paroi extérieure (27) de la partie femelle (20) et étant espacées dans la direction circonférentielle avec un évidement entre elles, chacune des deux barres (40) portant à son extrémité libre l'une des deux dents de verrouillage (34), dans laquelle les deux barres (40) sont à leurs extrémités libres reliées intégralement par la partie de pont étendue radialement (36).

3. Paire de raccord selon la revendication 2, **caractérisée en ce que** chaque barre (40) est, à l'exception de son extrémité qui est raccordée intégralement à la paroi extérieure (27) de la partie femelle, entourée par des évidements dans la paroi extérieure (27), dans laquelle une partie d'extrémité de chaque barre (40) qui est adjacente à la paroi extérieure (27) se fond doucement dans la paroi extérieure (27) de la partie femelle au niveau d'une partie d'extrémité de la partie femelle (20) entourant une ouverture de l'espace intérieur (24) pour recevoir la partie mâle (1).

4. Paire de raccord selon la revendication 2 ou 3, **caractérisée en ce que** l'extrémité d'insertion (2) de la partie mâle (1) est pourvue d'un marqueur optique qui est agencé sur l'extrémité d'insertion (2) de telle sorte qu'il soit visible à travers au moins un évidement dans la paroi extérieure (27) lorsque la partie mâle (1) est à l'état complètement inséré dans la partie femelle (20).

5. Paire de raccord selon la revendication 4, **caractérisée en ce que** le marqueur optique est un anneau de couleur s'étendant circonférentiellement autour de l'extrémité d'insertion (4) de la partie mâle.

6. Paire de raccord selon l'une quelconque des revendications 2 à 5, **caractérisée en ce que** les deux barres (40) de chacune des au moins une languette de verrouillage (30) convergent vers leurs extrémités libres de telle sorte que la distance circonférentielle entre les extrémités libres des barres (40) soit inférieure à la distance circonférentielle entre les parties d'extrémité des barres (40) qui sont raccordées intégralement à la paroi extérieure (27) de la partie femelle (20).

7. Paire de raccord selon l'une quelconque des revendications 2 à 6, **caractérisée en ce que** les deux parties d'extrémité des barres (40) s'étendant intégralement depuis la paroi extérieure (27) sont raccordées l'une à l'autre par une seconde partie de pont (42) s'étendue radialement de la paroi extérieure (27) qui fait saillie radialement au-delà des parties de paroi extérieure (28) circonférentiellement adjacentes de la partie femelle (20).

8. Paire de raccord selon l'une quelconque des revendications précédentes, **caractérisée en ce qu'**il existe deux languettes de verrouillage (30) sur la partie femelle (20) qui sont situées diamétralement opposées sur le réceptacle (22).

9. Paire de raccord selon l'une quelconque des revendications précédentes, **caractérisée en ce que** la saillie (8) de la partie mâle (1) comprend un épaulement s'étendant circonférentiellement présentant une partie de rampe montante (10) suivie d'une partie fortement descendante (12), dans laquelle la partie de rampe montante (10) est agencée pour coopérer avec les dents de verrouillage (34) de la au moins une languette de verrouillage (30) de telle sorte que lors de l'insertion de la partie mâle (1) dans l'espace intérieur (24) de la partie femelle (20), les dents de verrouillage (34) coulissent le long de la partie de rampe montante (10) en poussant la au moins une languette de verrouillage (30) radialement vers l'extérieur, dans laquelle la au moins une languette de verrouillage fléchit de manière élastique vers l'intérieur une fois que les dents de verrouillage (34) ont atteint la partie fortement descendante (12) de l'épaulement circonférentiel, moyennant quoi les dents de verrouillage (34) viennent en prise dans la partie fortement descendante (12) de l'épaulement circonférentiel pour empêcher un retrait de la partie mâle (1) depuis la partie femelle (20).

10. Paire de raccord selon la revendication 9, **caractérisée en ce que** la partie mâle (1) est pourvue de deux épaulements circonférentiels suivants qui sont espacés dans la direction d'insertion de telle sorte que la au moins une languette de verrouillage (30) vienne d'abord en prise avec un premier des deux épaulements dans un état partiellement inséré de la partie mâle (1), après quoi, lorsqu'elle est avancée davantage dans la direction d'insertion dans la partie femelle, elle vient en prise avec un second des deux épaulements circonférentiels lorsque la partie mâle (1) a atteint l'état complètement inséré dans la partie femelle (20) .

11. Paire de raccord selon la revendication 10, **caractérisée en ce que** la partie mâle (1) et la partie femelle (20) sont chacune pourvues de surfaces de verrouillage rotatives qui sont agencées l'une par rapport à l'autre de telle sorte que les surfaces de verrouillage rotative de la partie mâle ne viennent pas en prise avec les surfaces de verrouillage rotatives de la partie femelle (20) lorsque la partie mâle (1) est dans l'état partiellement inséré et de telle sorte que les surfaces de verrouillage rotatives de la partie mâle (1) viennent en prise avec les surfaces de verrouillage rotatives de la partie femelle (20) dans l'état complètement inséré de la partie mâle (1) dans la partie femelle (20) de telle sorte que la partie mâle (1) soit verrouillée à l'encontre de mouvements de rotation dans l'état complètement inséré dans la partie femelle (20) uniquement.

12. Paire de raccord selon l'une quelconque des revendications précédentes, **caractérisée en ce que** la partie femelle (20) est équipée d'un outil de libération (50) présentant une partie annulaire (52) ajustée autour de la paroi extérieure (27) de la partie femelle (20) et pouvant coulisser dans la direction axiale sur la partie femelle (20), dans laquelle la partie annulaire (52) est munie d'au moins une saillie qui fait saillie à partir de la partie annulaire dans une direction parallèle à l'axe central et qui forme la partie d'outil de libération en forme de coin (54) agencée pour être déplacée dans l'espace (38) de la partie de pont (36) de la au moins une languette de verrouillage (30) lorsque la partie annulaire (52) est déplacée vers la partie de pont (36) de la au moins une languette de verrouillage (30) pour libérer la au moins une languette de verrouillage (30) de la saillie (8) de la partie mâle (1).

13. Paire de raccord selon la revendication 12, **caractérisée en ce que** la paroi extérieure (27) de la partie femelle (30) est pourvue d'une caractéristique de surface droite (29) s'étendant parallèlement à l'axe central de la partie femelle (20) et configurée pour coopérer avec une caractéristique de surface conjuguée (56) formée dans la partie annulaire (52) pour guider la partie annulaire (52) et la maintenir dans une orientation circonférentielle de telle sorte que la ou chaque saillie soit alignée circonférentiellement avec l'une associée des au moins une languettes de verrouillage (30) de telle sorte qu'elle soit déplacée dans le jeu (38) de la partie de pont (36) lorsque la partie annulaire (52) est déplacée vers la partie de pont (36) de la au moins une languette de verrouillage (30).

14. Paire de raccord selon l'une quelconque des revendications précédentes, **caractérisée en ce que** la partie femelle (20) est formée intégralement d'un matériau thermoplastique.

15. Paire de raccord selon l'une quelconque des revendications précédentes, **caractérisée en ce que** la partie mâle (1) est formée intégralement de métal ou de matériau thermoplastique.
